**Europäisches Patentamt**

**European Patent Office**

**Office européen des brevets**

(19)

(11) Veröffentlichungsnummer: **0 083 014**
**B1**

(12) **EUROPÄISCHE PATENTSCHRIFT**

(45) Veröffentlichungstag der Patentschrift:
26.11.86

(51) Int. Cl.⁴: **C 08 L 77/00, C 08 L 55/00**

(21) Anmeldenummer: **82111531.8**

(22) Anmeldetag: **13.12.82**

(54) **Schlagzähe Polyamid-Formmassen.**

(30) Priorität: **24.12.81 DE 3151441**

(43) Veröffentlichungstag der Anmeldung:
**06.07.83 Patentblatt 83/27**

(45) Bekanntmachung des Hinweises auf die Patenterteilung:
**26.11.86 Patentblatt 86/48**

(84) Benannte Vertragsstaaten:
**DE FR GB IT NL SE**

(56) Entgegenhaltungen:
**EP-A-0 043 491**
**DE-A-2 654 346**
**DE-A-2 941 025**

**Patent Abstracts of Japan, Band 4, Nr. 182, 16.
Dezember 1980**
**Patent Abstracts of Japan, Band 1, Nr. 166, 27-
Dezember 1977, Seite 3591C77**

(73) Patentinhaber: **BAYER AG, Konzernverwaltung RP
Patentabteilung, D-5090 Leverkusen 1 Bayerwerk
(DE)**

(72) Erfinder: **Grigo, Ulrich, Dr., c/o Mobay Chemical
Corporation, New Martinsville W. Virginia 26155
(US)**
Erfinder: **Fahnler, Friedrich, Wimmersweg 60,
D-4150 Krefeld 1 (DE)**
Erfinder: **Binsack, Rudolf, Dr., Bethelstrasse 4a,
D-4150 Krefeld 1 (DE)**

**Beschreibung**

Die Erfindung betrifft thermoplastische Polyamidformmassen mit einer außergewöhnlich hohen Kerbschlagzähigkeit, insbesondere in der Kälte, und einer wesentlich verbesserten Wechselknickfestigkeit, die durch inniges Vermischen von thermoplastischen polyamiden und teilvernetzten Polymer-Mischungen aus polybutadien-Kautschuken und Ethylen-Copolymerisaten und/oder Polyethylen-pfropfcopolymerisaten hergestellt worden sind.

Die Schlagzähigkeit von Formteilen aus PA-Formmassen hängt erheblich von deren Wassergehalt ab. Im Trockenzustand sind die Teile empfindlich gegen Schlagbeanspruchung. Ihre bekannte hervorragende Schlagzähigkeit erreichen sie erst durch-Konditionierung, d.h. nach Aufnahme von Wasser. Die Konditionierung der Polyamide ist jedoch ein zeitraubender Vorgang, der mehrere Tage dauert, zumal das Wasser nicht in Oberflächenschichten konzentriert sein darf, sondern gleichmäßig im ganzen Formteil verteilt sein muß.

Es ist deshalb wiederholt versucht worden, den Polyamiden durch Vermischen mit geeigneten Substanzen schon im Trockenzustand die Zähigkeit zu verleihen, die sie sonst nur durch Konditionierung erreichen.

Die Zähigkeit der Polyamidformmassen kann beispielsweise durch Einarbeitung von niedermolekularen Weichmachern verbessert werden. Solche Weichmacher besitzen jedoch folgende Nachteile:

1. Wegen ihres zumeist hohen Dampfdruckes unter den Bedingungen der Einarbeitung ins Polyamid verdampft ein Teil der Weichmacher.

2. Die niedermolekularen Weichmacher neigen zum Ausschwitzen.

3. Sie versagen bei tiefen Temperaturen.

4. Die Verbesserung der Zähigkeit ist mit einem erheblichen Abfall von Biegefestigkeit und E-Modul verbunden.

Es wurde auch versucht, die Zähigkeit von Polyamiden durch Zumischen von Polyethylen zu verbessern. Handelsübliches polyethylen ist jedoch mit den Polyamiden nicht verträglich. Beim Knicktest der aus solchen Legierungen hergestellten Prüfkörper treten starke Abschieferungen auf.

Nach der DAS 1 694 802 kann die Verträglichkeit von Polyamid und Polyethylen durch Zusatz von Copolymeren aus Ethylen und Acrylsäure(derivaten) verbessert werden. Sie bleibt jedoch unbefriedigend.

Aus der DAS 1 138 922 ist die Verbesserung der Zähigkeit von Polyamid-Formmassen durch Zumischen von Co-polymerisaten aus Ethylen und Vinylacetat bekannt.

In zahlreichen Veröffentlichungen, beispielsweise US-PS 3 472 916, DE-PS 1 241 606, 1 544 706, 1 669 702 wird eine Anhebung der Zähigkeit von Polyamid-Formmassen durch Abmischen mit Copolymerisaten aus Ethylen und $\alpha,\beta$-ungesättigten Säuren oder deren Derivaten beschrieben.

All diesen Lösungsvorschlägen zur Verbesserung der Schlagzähigkeit von Polyamid-Formmassen haftet jedoch der Nachteil an, daß die Kerbschlagzähigkeit in der Kälte und die Wechselknickfestigkeit kaum verbessert werden.

Um Polyamiden hohe Kerbschlagzähigkeiten, insbesondere in der Kälte, zu verleihen, müssen den Polyamiden kautschukartige Komponenten mit tiefen Einfriertemperaturen, z.B. Polybutadien-Kautschuk, zugemischt werden. So werden in den DE-OS 2 742 176 und 29 41 025 modifizierte Polyamide beschrieben, die durch Mischen von thermoplastischen Polyamiden und teilvernetzten, kugelförmigen Pfropfcopolymerisaten aus polybutadien (Pfropfgrundlage) und z.B. (Meth)Acrylaten und/oder Styrol/ Acrylnitril-Gemischen (Pfropfauflage) hergestellt worden sind. Die auf diesem Wege modifizierten Polyamide besitzen zwar hohe Kerbschlagzähigkeiten, aber keine ausreichende Wechselknickfestigkeiten.

Unvernetzte Polybutadien-Kautschuke lassen sich nur unter Schwierigkeiten in Polyamid einarbeiten. Produkte dieser Art weisen Inhomogenitäten auf und besitzen nur ein mäßiges Zähigkeitsniveau.

Überraschend wurde nun gefunden, daß durch Modifizierung von Polyamid mit polaren Polyethylenen und vernetzten Polybutadien-Kautschuken hohe Kerbschlagzähigkeiten, insbesondere in der Kälte, und stark verbesserte Wechselknickfestigkeiten bewirkt werden.

Gegenstand der vorliegenden Erfindung sind daher thermoplastische Polyamid-Formmassen bestehend aus:

I. 35 - 99 Gew.-%, vorzugsweise 45-97 Gew.-% Polyamiden und

II. 1 - 65 Gew.-%, vorzugsweise 3-55 Gew.-% einer teilvernetzten Polymermischung mit einem Gelanteil von 5-95 Gew.-% aus

a) 5 - 80 Gew.-%, vorzugsweise 20-70 Gew.-% eines Copolymerisats aus Ethylen/(Meth)acrylsäure und/oder (Meth)acrylaten mit $C_1$ bis $C_8$-Alkoho-len und/oder eines Pfropfpolymerisats aus Polyethylen oder Ethylen/Vinylacetat-Copolymeren als Pfropfgrundlage und (Meth)-acrylsäure und/ oder (Meth)acrylaten mit $C_1$-$C_8$-Alkoholen als Pfropfauflage und aus

b) 95 - 20 Gew.-%, vorzugsweise 30-80 Gew.-% Polybutadien-Kautschuken mit einer Mooney-Viskosität ML 1 +4 (100° C) von 5-100 und einem Gelanteil von < 2 Gew.-%, bestimmt in siedendem Chlorbenzol,

III gegebenenfalls üblichen Zuschlagstoffen, und ggf.

IV. 10 - 60 Gew.-%, bezogen auf die Gasamtformmasse, Füll- und/oder Verstärkungsstoffe, wobei die Summe a s I - III sowie a) und b) jeweils 100 Gew.-% ergeben muß.

Erfindungsgemäß eignen sich vorzugsweise aliphatische Polyamide mit einer relativen Viskosität von 2,3 - 4,8, vorzugsweise 2,7 - 4,3 (gemessen an einer 1 Gew.-%igen Lösung in m-Kresol bei 20° C) zur Herstellung der Formmassen. Besonders bevorzugt werden Polyamid-6 und/oder Polyamid-6,6 aber auch deren Gemische und

2

Block- bzw. Copolymere aus z.B. Caprolactam, Adipinsäure und Hexamethylendiamin verwendet.

Für die Herstellung der teilvernetzten Polymermischungen II werden als Kautschuk-Bestandteil Polybutadien-Kautschuke verwandt, die einen Gelanteil von < 2 Gew.-% (bestimmt durch halbstündiges Erhitzen in siedendem Chlorbenzol) und eine Mooney-Viskosität ML 1+4 (100°C) von 5 bis 100 aufweisen. Bevorzugt sind Produkte mit einer Mooney-Viskosität ML 1+4 (100°C) von 20 - 60.

In Polybutadien-Kautschuken können die Butadien-Einheiten über 1,2- und 1,4-Verknüpfungen miteinander verbunden sein. Der Anteil an 1,4-Verknüpfungen sollte vorzugsweise 30-99,9 % betragen. Besonders bevorzugt sind Polybutadien-Kautschuke mit einem 1,4-Anteil von 50-99,0 %.

Die Herstellung der Polybutadien-Kautschuke erfolgt nach bekannten Verfahren. Durch Variation der Reaktionsbedingungen läßt sich nahezu ein beliebiger 1,4-Anteil im Polybutadien-Kautschuk einstellen. Die in den Beispielen eingesetzten Polybutadien-Kautschuke sind handelsübliche Produkte.

Als weiterer Bestandteil für die teilvernetzten Polymer-Mischungen II werden Polyethylene mit polaren Gruppen verwendet. In Frage kommen Ethylen-Copolymerisate und/oder Polyethylen-Pfropfprodukte.

Die Ethylen-Copolymerisate können nach bekannten Verfahren durch Copolymerisaten von Ethylen mit $\alpha$, ß-ungesättigten Säuren oder deren Derivaten hergestellt werden. Die erfindungsgmäß eingesetzten Ethylen-Copolymerisate sind hergestellt vorzugsweise aus 99-40, vorzugsweise 97-75 Gew.-% Ethylen und aus 1-60 Gew.-%, vorzugsweise 3-25 (Meth)acrylsäure und/oder deren Estern mit $C_1$-$C_8$-Alkoholen als Monomer. Der Gelanteil der Ethylen-Copolymerisate sollte vorzugsweise 5-30 Gew.-% (bestimmt in siedendem Chlorbenzol) betragen. Bevorzugt werden Produkte mit einem Comonomer-Anteil von 3-25 Gew.-% eingesetzt.

Die erfindungsgemäß verwendeten Polyethylen-Pfropfprodukte können nach bekannten Verfahren (beschrieben z.B. in JA 34-30945, DE-OS 24 54 770) hergestellt werden. Bevorzugte Polyethylen-Pfropfpolymerisate werden nach einem in der DE-OS 2 801 585 näher beschriebenen Verfahren hergestellt. Hierbei wird eine sog. Substanz-Pfropfpolymerisation durchgeführt, nach der die Schmelze der als Pfropfgrundlage dienenden Polyethylene oder Copolymere unter einem Druck von 1-150 bar bei einer Temperatur von 80-300°C mit Sauerstoff oder Sauerstoff-haltigen Gasen max. 10 Minuten in Kontakt bringt, unmittelbar danach bei Abwesenheit von Sauerstoff bzw. Sauerstoffhaltigem Gas unter intensiver Durchmischung die aufzupropfenden Monomere zufügt und nach der Polymerisation die Restmonomeren entfernt.

Die nach diesem Verfahren hergestellten Polyethylen-Pfropfprodukte enthalten als Pfropfgrundlage Polyethylen und/oder Vinylacetat und als Pfropfauflage 1 - 60 Gew.-% (Meth)acrylsäure und/oder Ester der (Meth)acrylsäure mit $C_1$-$C_8$-Alkoholen. Der Gelgehalt der Polyethylen-Pfropf-Polymerisate sollte 2-20 Gew.-% (bestimmt in siedendem Chlorbenzol) betragen. Erfindungsgemäß werden bevorzugt die Polyethylen-Pfropfpolymerisate unter Einsatz von 3-25 Gew.-% aufzupfropfenden Monomeren hergestellt. Das Pfropfprodukt enthält gepfropfte Copolymerisate und ungepropfte Homopolymerisate.

Die teilvernetzten Polymer-Mischungen werden hergestellt, indem die Ethylen-Copolymerisate und/oder Polyethylen-Pfropfcopolymerisate zusammen mit dem Polybutadien-Kautschuk in üblichen Mischaggregaten wie Walzen, Kneter, Ein- und Mehrwellenextruder bei Massetemperaturen von 150 - 250°C gemischt werden. Besonders geeignet sind Innenkneter.

Während des Mischprozesses kommt es zu einer teilweisen Vernetzung, die sich darin ausdrückt, daß der Gelgehalt der Legierung deutlich über dem Gelgehalt der Ausgangskomponenten liegt. Der Gelgehalt der teilvernetzten Polymer-Mischungen (bestimmt durch 1/2-stündiges Erhitzen in siedendem Chlorbenzol), beträgt 5 - 95 Gew.-%. Besonders bevorzugt sind teilvernetzte Polymer-Mischungen mit einem Gehalt von 20-70 Gew.-%.

Die Herstellung der erfindungsgemäßen Polyamid-Formmassen kann in den üblichen Mischaggregaten wie Walzen, Kneter, Ein- und Mehrwellenextruder erfolgen. Besonders geeignet sind Doppelwellenextruder.

Die Formmassen können auf den genannten Mischaggregaten hergestellt werden, indem die beiden Komponenten I und II gemeinsam aufgeschmolzen und homogenisiert werden, oder indem das Produkt II in die Schmelze des Polyamids I eingearbeitet wird.

Die erfindungsgemäßen Formmassen können übliche Zuschlagstoffe, wie Gleit- und Entformungsmittel, Nucleierungsmittel, Stabilisatoren, Flammschutzmittel sowie Farbstoffe, enthalten.

Darüber hinaus können die erfindungsgemäßen Formmassen Verstärkungsstoffe enthalten. Man beobachtet dann eine unerwartet hohe Schlag- und Kerbschlagzähigkeitverbesserung, insbesondere bei mehraxialer Schlagbeanspruchung. Die so verstärkten Formmassen enthalten in der Regel 10-60 Gew.-%, bevorzugt 15-50 Gew.-%, besonders bevorzugt 20-40 Gew.-%, bezogen auf die Gesamtformmasse, Verstärkungsmittel, insbesondere Glasfasern.

Die erfindungsgemäßen Formmassen können anstelle der Glasfasern oder in Kombination mit den Glasfasern auch andere Füll- oder Verstärkungsstoffe enthalten, beispielsweise Glaskugeln, Asbest, Talkum, Kaolin, Wollastonit, Microvit, Glimmer, Kreide, Quarz oder calcinierte Aluminiumsilikate.

Die erfindungsgemäßen Formmassen zeichnen sich durch extrem hohe Kerbschlagzähigkeiten, besonders in der Kälte, und hohe Wechselknickfestigkeiten aus. Die Formmassen sind deshalb besonders zur Fertigung von stark beanspruchten Teilen im Automobil-Sektor, wie z.B. für Stoßstangen und Karosserie-Teile, geeignet.

**Beispiele**

**Zusammensetzung der Ethylen-(Pfropf-)-Copolymerisate (Tabelle 1)**

In Tabelle 1 sind die in den Beispielen eingesetzten Ethylen-(pfropf-)-Copolymerisate zusammengestellt. Das Produkt a ist ein Ethylencopolymerisat, während die Produkte b - g Ethylenpfropfcopolymerisate darstellen, die als Pfropfgrundlage Baylon 19N430 ® (Hochdruckpolyethylen der Bayer AG) und als Pfropfauflage Acrylsäure und/oder (Meth-)Acrylsäureester enthalten. Das Produkt h enthält als Pfropfgrundlage ein Ethylen/Vinylacetat-Copolymerisat, auf das t-Butylacrylat gepfropft ist.

Tabelle 1: Zusammensetzung der Ethylen(Pfropf)Copolymerisate

| Bezeichnung | Typ | Zusammensetzung Pfropfgrundlage | Pfropfmonomere | Gelanteil [3]) % |
|---|---|---|---|---|
| a | Copolymerisat[1] | – | – | 17,2 |
| b | Pfropf-Copolymerisat | 92 % Polyethylen [2]) | 4,0 % n-BA<br>4,0 % t-BA | 9,2 |
| c | " " | 96,4 % Polyethylen [2]) | 3,6 % t-BA | 4,0 |
| d | " " | 90,0 % " " | 9 % n-BA<br>1 % AS | 12,0 |
| e | " " | 88 % " " | 8 % n-BA<br>4 % t-BA | 8,0 |
| f | " " | 93 % " " | 6 % n-BA<br>1 % t-BA | 10,2 |
| g | " " | 93 % " " | 4 % n-BA<br>3 % MMA | 7,3 |
| h | " " | 96 % Ethylen/Vinylacetat Copolymerisat [4]) | 4 % t-BA | 6,1 |

1) = Ethylen-Copolymerisat mit 4 Gew.-% Acrylsäure und 7 Gew.-% n-Butylacrylat

2) Hochdruckpolyethylen BAYLON ® 19 N 430 der Bayer AG

3) bestimmt durch 1/2-stündiges Erhitzen in siedendem Chlorbenzol

4) Copolymerisat aus Ethylen u. 8 Gew.-% Vinylacetat BAYLON ® 10 M 460 der Bayer AG

t-BA = tert. Butylacrylat

n-BA = n- "

AS = Acrylsäure

MMA = Methylmethacrylat

Die Pfropfcopolymerisate b bis g sind nach dem in der DE-OS 28 01 585 beschriebenen Verfahren hergestellt worden.

**Herstellung der teilvernetzten Polymermischungen aus Ethylen-(Pfropf)copolymerisaten und Polybutadien-Kautschuken (Tabelle 2)**

Die Herstellung der teilvernetzten Polymer-Mischungen A bis P in Tabelle 2 erfolgte in einem 1 1-Innenkneter der Fa. Werner & Pfleiderer, indem die berechnete Menge Ethylen(Pfropf-)-Copolymerisat zusammen mit dem zerkleinerten Polybutadien-Kautschuk in den Kneter gegeben wurde. Die eingestellte Temperatur im Kneter betrug 130°C. Die Knetzeit betrug ca. 7 min., wobei der Knetverlauf über einen Energieaufnahme-Schreiber verfolgt wurde. Die Massetemperatur während des Knetprozesses betrug je nach Zusammensetzung der Polymer-Mischung 150-230°C. Das Knetprodukt wurde auf eine auf 100°C aufgeheizte Walze gegeben und zu einem Fell ausgezogen. Das Fell wurde zu 5 cm großen Stücken zerschnitten und anschließend granuliert.

An dem Granulat wurde der Gelanteil bestimmt, indem 2 g Substranz 1/2 Stunde lang in siedendem Chlorbenzol erhitzt wurden. Die Lösung wurde anschließend abgekühlt und filtriert. Der unlösliche Anteil entspricht dem Gelanteil.

**Herstellung der Polyamid-Formmassen (Tabelle 3)**

Die Einarbeitung der teilvernetzten Polymer-Mischungen A bis P in Polyamid erfolgte in einem handelsüblichen, kontinuierlich arbeitenden Doppelwellenextruder ZSK 32 der Fa. Werner & Pfleiderer, in dem das Polyamid und die polymermischungen nach vorherigem Mischen gemeinsam in den Extruder eindosiert werden. Stickstoffbeschleierung ist zweckmäßig. Die teilvernetzte polymermischung aus Ethylen (Pfropf-)Copolymerisat und Kautschuk wurde aufgeschmolzen und im Polyamid homogen verteilt. Es kann vorteilhaft sein, die Schmelze vor dem Auftritt aus der Düse zu entgasen. Die Zylindertemperaturen wurden so eingestellt, daß eine Massetemperatur von 280-230°C gewährleistet war. Der Schmelzestrang der Mischung aus Polyamid und Pfropfprodukt wurde in Wasser abgekühlt, granuliert und getrocknet. Vom Granulat wurden auf einer üblichen Spritzgußmaschine bei 260°C Normkleinstäbe (nach DIN 53 453) und Flachstäbe (nach DIN 53 453) verspritzt.

Geprüft wurde an den Normkleinstäben die Kerbschlagzähigkeit bei Raumtemperatur und -40°C nach DIN 53 453, die Biegefestigkeit nach DIN 53 452 und an den Flachstäben die Wechselknickfestigkeit (in Anlehnung an DIN 53 353).

Die Zusammensetzung und die Eigenschaften der Formmassen sind Tabelle 3 zu entnehmen.

Die Herstellung der verstärkten Formmassen erfolgte so, daß in die Schmelze, bestehend aus Polyamid und teilvernetzter Polymer-Mischung, Glasfasern in Form von geschnittenen Glasfactivsträngen eingearbeitet wurden, so daß die aus der Düse in Strangform ausgepreßte Mischung ca. 30 Gew.-% Glasfasern enthielt. Die Stränge wurden in einem Wasserbad abgekühlt, granuliert und getrocknet. Das Granulat wurde auf einer Spritzgußmaschine zu Prüfkörpern verarbeitet. Die Spritzlinge wurden trocken in spritzfrischem Zustand geprüft.

Zur Beurteilung der mechanischen Eigenschaften wurden Schlagzähigkeit und Kerbschlagzähigkeit (nach DIN 53 453), Schädigungsarbeit nach dem mehrachsialen Schlagversuch (nach DIN 53 443) sowie Biegefestigkeit (nach DIN 53 452) bestimmt. Zusammensetzung und Eigenschaften der verstärkten Polyamid-Formmassen sind Tabelle 4 zu entnehmen.

Tabelle 2:    Zusammensetzung der teilvernetzten Polymer-Mischungen aus Polybutadien-Kautschuken und Polyethylen-Copolymerisaten

| Typ | Polybutadien-Kautschuk | | Pfropfcopolymerisat | | Gelanteil [1] |
|---|---|---|---|---|---|
| | Gew.-Tle [2] | Gew.-Tle. [3] | Gew.-Tle. | Typ | % |
| A [4] | 66 | – | 34 | Hochdruckpoly-® ethylen BAYLON 19 N 430 | 54 |
| B [4] | – | 66 | 34 | | 51 |
| C | 66 | – | 34 | b | 57 |
| D | – | 60 | 40 | c | 53 |
| E | – | 60 | 40 | e | 56 |
| F | – | 60 | 40 | f | 58 |
| G | – | 60 | 40 | a | 55 |
| H | 70 | – | 30 | d | 62 |
| I | 60 | – | 40 | c | 58 |
| J | 60 | – | 40 | e | 57 |
| K | 60 | – | 40 | f | 58 |
| L | – | 80 | 20 | e | 41 |
| M | – | 70 | 30 | e | 45 |
| N | – | 50 | 50 | e | 58 |
| O | – | 30 | 70 | e | 69 |
| P | 50 | – | 50 | h | 63 |

Tabelle 2 (Fortsetzung)
1) bestimmt durch 1/2-stündiges Erhitzen in siedendem Chlorbenzol
2) Polybutadien-Kautschuk (1,2-Anteil ca. 1,2 %) der Fa- Firestone (Diene WP 45 ®)
3) Polybutadien-Kautschuk (1,2-Anteil ca. 1 %) der Bayer AG (BUNA CB 1 P ®)
4) Vergleichsprodukte

Tabelle 3: Zusammensetzung und Eigenschaften der Polyamid-Formmassen

| Beispiel | Typ | Polyamid $\eta_{rel}$[2] | Gew.-% | teilvernetzte Polymermischung aus Tab. 2 Typ | Gew.-% | Kerbschlagzähigkeit (kJ/m²) 25°C | -40°C | Biegef. MPa | Wechselknickfestigkeit[3] |
|---|---|---|---|---|---|---|---|---|---|
| 1[1] | PA-6 |  | 70 | A | 30 | 16,5 | 2,1 | 58 | 7000 |
| 2[1] | PA-6 | 3,96 | 70 | B | 30 | 17,3 | 3,0 | 55 | 8500 |
| 3[1] | PA-6 | 3,96 | 80 | A | 20 | 15,6 | 2,4 | 67 | 6300 |
| 4[1] | PA-6 | 3,96 | 80 | B | 20 | 14,7 | 2,0 | 65 | 3600 |
| 5[1] | PA-6,6 | 3,04 | 70 | A | 30 | 6,7 | – | 64 | 1000 |
| 6 | PA-6 | 3,96 | 70 | G | 30 | 39,3 | 9,6 | 55 | 27000 |
| 7 | PA-6 | 3,96 | 80 | H | 20 | 46 | 12,4 | 66 | 22000 |
| 8 | PA-6 | 3,96 | 70 | C | 30 | 53,1 | 18,4 | 54 | 68000 |
| 9 | PA-6 | 3,96 | 70 | D | 30 | 49,4 | 16,2 | 53 | 71000 |
| 10 | PA-6 | 3,96 | 70 | E | 30 | 56,6 | 18,5 | 56 | 70500 |
| 11 | PA-6 | 3,96 | 70 | F | 30 | 54,7 | 19,6 | 57 | 67000 |
| 12 | PA-6 | 3,96 | 80 | I | 20 | 35,4 | 8,2 | 69,5 | 19000 |
| 13 | PA-6 | 3,96 | 80 | J | 20 | 55,6 | 17,4 | 71 | 36000 |
| 14 | PA-6 | 3,96 | 80 | K | 20 | 32,2 | 7,5 | 67 | 18000 |
| 15 | PA-6 | 3,96 | 70 | L | 30 | 34,7 | 8,4 | 52 | 27000 |
| 16 | PA-6 | 3,96 | 70 | M | 30 | 57,0 | 19,4 | 57 | 69000 |
| 17 | PA-6 | 3,96 | 70 | N | 30 | 57,1 | 20,2 | 61 | 66000 |
| 18 | PA-6 | 3,96 | 70 | O | 30 | 46,2 | 15,3 | 66 | 56000 |
| 19 | PA-6 | 3,96 | 80 | P | 20 | 62,2 | 16,4 | 65 | 19500 |
| 20 | PA-6 | 3,96 | 60 | I | 40 | 41,2 | 28,5 | 35 | 89000 |
| 21 | PA-6 | 3,96 | 60 | J | 40 | 32,1 | 24,0 | 25,2 | 100000 |
| 22 | PA-6,6 | 3,06 | 80 | J | 20 | 34,5 | 7,2 | 76 | 12000 |
| 23 | PA-6,6 | 3,06 | 70 | J | 30 | 46,3 | 9,7 | 65 | 22000 |

1) Vergleichsbeispiel

2) gemessen in m-Kresol bei 23°C im Ubbelohde Viskosimek

3) = Zahl der Hübe bis zum Bruch

Tabelle 4: Zusammensetzung und Eigenschaften der verstärkten Polyamid-Formmassen

| Beispiel | Typ | Polyamid $\eta_{rel}$ | Gew.-% | teilvernetzte Polymermischung aus Tab. 2 Typ | Gew.-% | Schlagz. kJ/m² 25°C | Kerbschlagz. kJ/m² 25°C | Schädigungsarbeit am Kästchen N.m | Biegefestigkeit MPa |
|---|---|---|---|---|---|---|---|---|---|
| 24 | PA-6 | 3,10 | 67 | J | 3 | 55,4 | 13,2 | 2,1 | 219 |
| 25 | PA-6 | 3,10 | 65 | J | 5 | 56,2 | 14,9 | 3,4 | 225 |
| 26 | PA-6 | 3,10 | 60 | J | 10 | 61,8 | 17,2 | 7,9 | 217 |
| 27 | PA-6 | 3,10 | 65 | N | 5 | 55,2 | 15,1 | 4,2 | 223 |

6

**Patentansprüche**

1. Thermoplastische Formmassen aus
I. 35 - 93 Gew.-% Polyamiden und
II 65- 1 Gew.-% teilvernetzten Polymermischungen mit einem Gelanteil von 5 - 35 Gew.-% hergestellt aus
a) 5 - 80 Gew.-% eines Copolymerisats aus Ethylen/ (Meth)acrylsäure und/oder (Meth)acrylaten mit $C_1$-$C_8$-Alkoholen
und/oder
5 - 80 Gew.-% eines Pfropfprodukts aus Polyethylen oder Ethylen/Vinylacetat-Copolymerisaten als Pfropfgrundlage und (Meth)acrylsäure und/oder (Meth)acrylaten mit $C_1$-$C_8$-Alkoholen als Pfropfauflage
und aus
b) 95 - 20 Gew.-% Polybutadien-Kautschuken mit einer Mooney-Viskosität $ML_{1+4}$ (100°C) von 5-100 und einem Gelanteil von kleiner als 2 Gew.-%, bestimmt in siedendem Chlorbenzol,
III. gegebenenfalls üblichen Zuschlagstoffen und
IV. gegebenenfalls 10-60 Gew.-%, bezogen auf die Gesamtformmasse, Füll- und/oder Verstärkungsstoffen, wobei die Summe aus I-III sowie a) und b) jeweils 100 Gew.-% ergeben muß.
2. Thermoplastische Formmassen nach Anspruch 1, dadurch gekennzeichnet, daß sie aus
45-97 Gew.-% der Komponente I und
53- 3 Gew.-% der Komponente II
bestehen.
3. Thermoplastische Formmassen nach Anspruch 1 oder 2, dadurch gekennzeichnet, daß der Gelanteil der Komponente II 20 - 70 Gew.-% beträgt.
4. Thermoplastische Formmassen nach Ansprüchen 1-3, dadurch gekennzeichnet, daß die Komponente II aus
20-70 Gew.-% der Komponente a) und
80-30 Gew.-% der Komponente b)
besteht.
5. Thermoplastische Formmassen nach Ansprüchen 1-4, dadurch gekennzeichnet, daß das Copolymerisat a) aus 99 - 40 Gew.-% Ethylen und 1 - 60 Gew.-% (Meth) acrylsäure und/oder (Meth)acrylsäureester besteht.
6. Thermoplastische Formmassen nach Ansprüchen 1-5, dadurch gekennzeichnet, daß das Pfropfprodukt a) aus 40 - 99 Gew.-% aus Polyethylen und/oder Ethylen/ Vinylacetat-Copolymerisat als Pfropfgrundlage und 1 - 60 Gew.-% aufzupfropfenden Monomeren hergestellt worden ist.
7. Thermoplastische Formmassen nach Ansprüchen 5 und 6 dadurch gekennzeichnet, daß 3 - 25 Gew.-% Comonomere bzw. aufzupfropfende Monomere eingesetzt werden.
8. Thermoplastische Formmassen nach Ansprüchen 1-7, dadurch gekennzeichnet, daß der Polybutadien-Kautschuk b) eine Mooney-Viskosität $ML_{1+4}$ (100°C) von 20-60 aufweist.
9. Thermoplastische Formmassen nach Ansprüchen 1-8, dadurch gekennzeichnet, daß als Komponente I Polyamid 6, Polyamid-6,6, deren Gemische und Blockoder Copolymerisate verwendet werden.

**Claims**

1. Thermoplastic moulding compositions of
I. 35 - 99% by weight of polyamides and
II. 65 - 1% by weight of partially cross-linked polymer mixtures having a gel content of 5 - 95% by weight, produced from
a) 5 - 80% by weight of a copolymer of ethylene/ (meth)acrylic acid and/or (meth)acrylates formed with $C_1$-$C_8$-alcohols
and/or
5 - 80% by weight of a graft product of polyethylene or ethylene/vinyl acetate copolymers as the graft substrate and (meth)acrylic acid and/or (meth)acrylates formed with $C_1$-$C_5$-alcohols as the graft superstrate and from
b) 95 - 20% by weight of polybutadiene rubbers having a Mooney viscosity $ML_{1+4}$ (100°C) of 5 - 100 and a gel content of less than 2% by weight, determined in boiling chlorobenzene,
III. optionally customary additives and
IV. optionally 10-60%, by weight, based on the total moulding composition, of fillers and/or reinforcing materials, wherein the total of I-III and of a) and b) mist in each case be 100% by weight.
2. Thermoplastic moulding compositions according to Claim 1, characterised in that they consist of 45-97% by weight or component I and 53-3% by weight of component II.
3. Thermoplastic moulding compositions according to Claim 1 or 2, characterised in that the gel content of component II is 20 - 70% by weight.
4. Thermoplastic moulding compositions according to Claims 1-3, characterised in that component II consists of 20-70% by weight of component a) and 80-30% by weight of component b).
5. Thermoplastic moulding compositions according to Claims 1-4, characterised in that copolymer a) consists of 99 - 40% by weigth of ethylene and 1 - 60% by weight of (meth)acrylic acid and/or (meth)acrylic axid ester.

6. Thermoplastic moulding compositions according to Claims 1-5, characterised in that the graft product a) has been produced from 40 - 99% by weight of polyethylene and/or ethylene/ vinyl acetate copolymer as the graft substrate and 1 - 60% by weight of monomers to be grafted on.

7. Thermoplastic moulding compositions according to Claims 5 and 6, characterised in that 3 - 25% by weight of comonomers or monomers to be grafted on are used.

8. Thermoplastic moulding compositions according to Claims 1-7, characterised in that the polybutadiane rubber b) has a Mooney viscosity ML $1+4$ ($100°C$) of 20 - 60.

9. Thermoplastic moulding compositions according to Claims 1-4, charactarised in that polyamide 6, polyamide 6,6, and mixtures and block or copolymers thereof are used as component I.


## Revendications

1. Mélanges à mouler thermoplastiques formés de

I. 35 à 99% en poids de polyamides et

II. 65 à 1 % en poids de mélanges polymériques partiellement réticulés ayant une teneur en gel de 5 à 95% . en poids, préparés à partir de

a) 5 à 80% en poids d'un copolymère éthylène/acide (méth) acrylique et/ou (méth) acrylates avec des alcools en $C_1$ à $C_8$,

et/ou

5 à 80 % en poids d'un produit greffé de polyéthylène ou de copolymères éthylène/acétate de vinyle comme substrat de greffage et d'acide (méth) acrylique et/ou de (méth) acrylates avec des alcools en $C_1$ à $C_8$ comme composés à greffer, et de

b) 95 à 20% en poids de caoutchouc polybutadiénique ayant une viscosité Mooney $ML_{1+4}$ ($100°C$) de 5 à 100 et une teneur en gel de moins de 2% en poids, déterminée dans le chlorobenzène bouillant,

III. le cas échéant des additifs classiques et

IV. le cas échéant, 10-60 % en poids, par rapport au mélange à mouler total, de charges et/ou de substances de renforcement.

la somme de I-III, de même que la somme de a) et b), devant à chaque fois atteindre 100 % en poids.

2. Mélanges à mouler thermoplastiques suivant la revendication 1, caractérisés en ce qu'ils sont formés de

45 à 97% en poids du composant I et

53-3% en poids du composant II.

3. Mélanges à mouler thermoplastiques suivant la revendication 1 ou 2, caractérisés en ce que la teneur en gel du composant II s'élève à 20-70 % en poids.

4. Mélanges à mouler thermoplastiques suivant les revendications 1-3, caractérisés en ce que le composant II est formé de

20-70% en poids du composant a) et

80-30% en poids du composant b).

5. Mélanges à mouler thermoplastiques suivant les revendications 1 à 4, caractérisés en ce que le produit de copolymérisation a) est formé de 99 à 40% en poids d'éthylène et de 1 à 60% en poids d'acide (méth) acrylique et/ou d'ester d'acide (méth) acrylique.

6. Mélanges à mouler thermoplastiques suivant les revendications 1 à 5, caractérisés en ce que le produit de greffage a) est formé de 40 à 99% en poids de polyéthylène et/ou de copolymère éthylène/acétate de vinyle comme substrat de greffage et de 1 à 60 % en poids de monomères à fixer par greffage.

7. Mélanges à mouler thermoplastiques suivant les revendications 5 et 6, caractérisés en ce que 3 à 25 % en poids de comonomères ou de monomères à fixer par greffage sont utilisés.

8. Mélanges à mouler thermoplastiques suivant les revendications 1 à 7, caractérisés en ce que le caoutchouc polybutadiénique b) présente une viscosité Mooney ML $1+4$ ($100°C$) de 20 à 60.

9. Mélanges à mouler thermoplastiques suivant les revendications 1 à 8, caractérisés en ce qu'on utilise comme composant I le polyamide 6, le polyamide 6, 6, leurs mélanges et des polymères séquencés ou des copolymères.